**Europäisches Patentamt**

**European Patent Office**

**Office européen des brevets**

(19)

(11) Veröffentlichungsnummer: **0 270 817**
**B1**

(12) # EUROPÄISCHE PATENTSCHRIFT

(45) Veröffentlichungstag der Patentschrift:
06.06.90

(51) Int. Cl.⁵: **B60K 15/04, B62D 25/12**

(21) Anmeldenummer: 87115876.2

(22) Anmeldetag: **29.10.87**

(54) **Anordnung eines um eine Klappachse schwenkbaren Klappdeckels an einem Fahrzeug.**

(30) Priorität: **04.11.86  DE 3637575**

(43) Veröffentlichungstag der Anmeldung:
**15.06.88 Patentblatt 88/24**

(45) Bekanntmachung des Hinweises auf die Patenterteilung:
**06.06.90 Patentblatt 90/23**

(84) Benannte Vertragsstaaten:
**DE ES FR GB IT SE**

(56) Entgegenhaltungen:
FR-A- 764 143
US-A- 2 739 010

(73) Patentinhaber: **Bayerische Motoren Werke Aktiengesellschaft, Patentabteilung AJ-30 Postfach 40 02 40 Petuelring 130, D-8000 München 40(DE)**

(72) Erfinder: **Steinberg, Klaus, Birkenstrasse 17, D-8054 Mauern(DE)**
Erfinder: **Wurtz, Richard, Oberanger 17, D-8261 Röhrmoos(DE)**
Erfinder: **Koziolek, Robert, Kurfürstenstrasse 2, D-8000 München 40(DE)**

(74) Vertreter: **Bücken, Helmut, Bayerische Motoren Werke Aktiengesellschaft Postfach 40 02 40 Petuelring 130 - AJ-30, D-8000 München 40(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf die Anordnung eines um eine Klappachse schwenkbaren Klappdeckels an einem Fahrzeug der im Oberbegriff des ersten Anspruchs angegebenen Art.

Klappdeckel zum Verschließen von insbesondere Kraftstoff-Einfüllstutzen sind heute an Kraftfahrzeugen üblicherweise in den Seitenwänden integriert. Das deutsche Gebrauchsmuster 76 31 183 zeigt beispielsweise eine derartige Anordnung. Insgesamt ergibt sich damit jedoch ein unschöner optischer Eindruck, da eine im allgemeinen bevorzugte glatte Oberfläche von den Trennfugen zum Klappdeckel unterbrochen wird. Meist ist der Klappdeckel dabei noch mit einer Griffmulde versehen, welche aber einen nicht zu vernachlässigenden Verschmutzungsherd bildet. Ein weiterer Nachteil einer derartigen Anordnung ist darin zu sehen, daß nur eine seitliche Befüllung des Kraftstofftanks möglich ist. Damit ergibt sich oftmals ein äußerst komplizierter Verlauf für die Förderleitung vom Kraftstoff-Einfüllstutzen zum Kraftstofftank, desweiteren muß der Benutzer des Kraftfahrzeuges beim Tankvorgang darauf achten, sein Fahrzeug so an der Zapfsäule abzustellen, daß Einfüllstutzen und Zapfsäule einander zugewandt sind.

Daneben zeigt die gattungsbildende DE-AS 10 99 874 einen im Heckbereich des Kraftfahrzeuges angeordneten Kraftstoff-Einfüllstutzen, dessen Klappdeckel an der unteren Abschlußkante der Gepäckraumhaube angelenkt ist. Eine derartige Gestaltung ist allerdings - insbesondere bei offenstehender Gepäckraumhaube - nicht nur unschön, sondern stellt beim Be- und Entladen des Gepäckraumes ein erhebliches Verletzungsrisiko dar. Ferner genügt ein im Heckbereich eines Kraftfahrzeuges liegender Kraftstofftank inklusive Einfüllstutzen nicht mehr den heutigen Anforderungen an die Unfallsicherheit. Auch ist die Befüllung eines derart tief liegenden Einfüllstutzens äußerst unbequem. Desweiteren muß bei der Betankung des Kraftfahrzeuges die Gepäckraumhaube geöffnet werden, was nicht nur bei schlechter Witterung Nachteile bringt, sondern auch Kraftstoffdämpfe in den Gepäckraum eindringen läßt.

Aufgabe der vorliegenden Erfindung ist es daher, einen einen Einfüllstutzen abdeckenden Klappdeckel so an einem Fahrzeug anzuordnen, daß unter Berücksichtigung stylistischer Anforderungen (geringe Anzahl von Trennfugen, gemeinsame Abschlußkanten, glatte Oberflächen usw.) eine einfache Zugänglichkeit des Einfüllstutzens gewährleistet ist.

Diese Aufgabe wird durch das kennzeichnende Merkmal des ersten Anspruchs gelöst.

Durch die Anordnung an einer schwenkbaren Haube wird die Kontinuität der Fahrzeugkarosserie-Seitenteile nicht gestört, und durch das Zusammenfallen der beiden Schwenkachsen entsteht eine gemeinsame Abschlußkante für Haube und Klappdeckel, sodaß die Anzahl der störenden Trennfugen gering gehalten ist. Da die Hauben-Schwenkachse in der Regel in einem Bereich mit guter Zugänglichkeit liegt, ist auch eine einfache Erreichbarkeit des Einfüllstutzens für den Benutzer gewährleistet, wobei vorteilhafterweise zugleich eine gegenüber der gattungsbildenden Schrift höhere Anordnung des Einfüllstutzens möglich ist. Somit kann auch ein sich an den Einfüllstutzen anschließender Flüssigkeitsbehälter günstiger gestaltet und im Fahrzeug optimal positioniert werden.

Eine besonders vorteilhafte Weiterbildung der Erfindung ist in Anspruch 2 beschrieben. Durch die Anordnung des Klappdeckels an einem Eckbereich der Haube ist für den Klappdeckel kein eigenes Klappscharnier erforderlich, vielmehr kann dieses Klappscharnier in dem ohnehin bereits vorhandenen Hauben-Schwenkscharnier integriert sein.

Ist gemäß Anspruch 3 die den Klappdeckel öffnende bzw. schließende Klapprichtung gleichsinnig mit der die Haube öffnenden bzw. schließenden Schwenkrichtung, so wird eine besonders güstige stylistische Formgebung erzielt. Der Klappdeckel bildet dabei einen Teil der Haube, er ist quasi in sie integriert und deckt einen Ausschnitt in der Haube ab. Unter stylistischen Gesichtspunkten ist eine derartige Anordnung weitaus gefälliger, als ein in einem starren Karosserieteil angeordneter Klappdeckel.

Anspruch 4 beschreibt einen günstigen Verlauf einer üblicherweise zwischen der Haube und den durch sie abgedeckten Karosserieteilen angeordneten Dichtung. Folgt dieser Verlauf nämlich im wesentlichen der Haubenkontur bei geöffnetem Klappdeckel, so erübrigt sich eine zusätzliche Dichtung zwischen der Haube und dem Klappdeckel. Zugleich ist dadurch der von der Haube abgedeckte Raum auf einfache Weise vom Einfüllstutzen getrennt. Eventuelle beim Befüllvorgang auftretende Dämpfe können somit beispielsweise nicht in den Gepäckraum gelangen.

Eine Federanordnung gemäß Anspruch 5 gewährleistet ein optimales Aufliegen des Klappdeckels in geschlossenem Zustand. Diese Federanordnung kann nach bekannter Weise vorgesehen sein, kann aber auch mit einer Federanordnung oder einem Kraftspeicher für die Haubenschwenkbewegung zusammenwirken. Wie ebenfalls bekannt, ist dabei für den Klappdeckel in geöffnetem Zustand eine Raststellung vorgesehen, in welcher er für den Befüllvorgang selbsttätig offen bleibt.

Eine besonders vorteilhafte Weiterbildung der vorliegenden Erfindung beschreibt Anspruch 6. In diesem Fall kann der Klappdeckel bei geschlossen bleibender Haube geöffnet werden, ebenso wie die Haube bei geschlossen bleibendem Klappdeckel schwenkbar ist. Realisierbar ist dies beispielsweise mittels einer entsprechenden Formgebung der Scharnierhebel. Diese können abgewinkelt ausgeführt sein, sodaß eine Schwenkbewegung der Haube ohne Kollision mit Klappdeckelbauteilen und umgekehrt erfolgen kann.

Im folgenden wird die Erfindung anhand eines bevorzugten Ausführungsbeispiels näher beschrieben. Es zeigt:

Fig. 1 die perspektivische Teilansicht eines Fahrzeughecks mit geöffneter Gepäckraumhaube sowie einem daran erfindungsgemäß angeordneten Klappdeckel und

Fig. 2 die gleiche Teilansicht mit geschlossener Gepäckraumhaube und geöffnetem Klappdeckel.

An einem Kraftfahrzeug mit Stufenheck schließt sich an die rückwärtige Scheibe 1 ein Gepäckraum 2 an. Dieser ist mit einer schwenkbaren Gepäckraumhaube 3 verschließbar. Dazu ist die Gepäckraumhaube 3 mittels eines Scharniers 4 sowie einer Gasdruckfeder 5 am Karosserieseitenteil 6 angelenkt. Die Gasdruckfeder 5 sowie der Scharnierhebel 7 sind fest mit der Gepäckraumhaube 3 verbunden, die Schwenkbewegung der Gepäckraumhaube 3 erfolgt in bzw. gegen Pfeilrichtung 8.

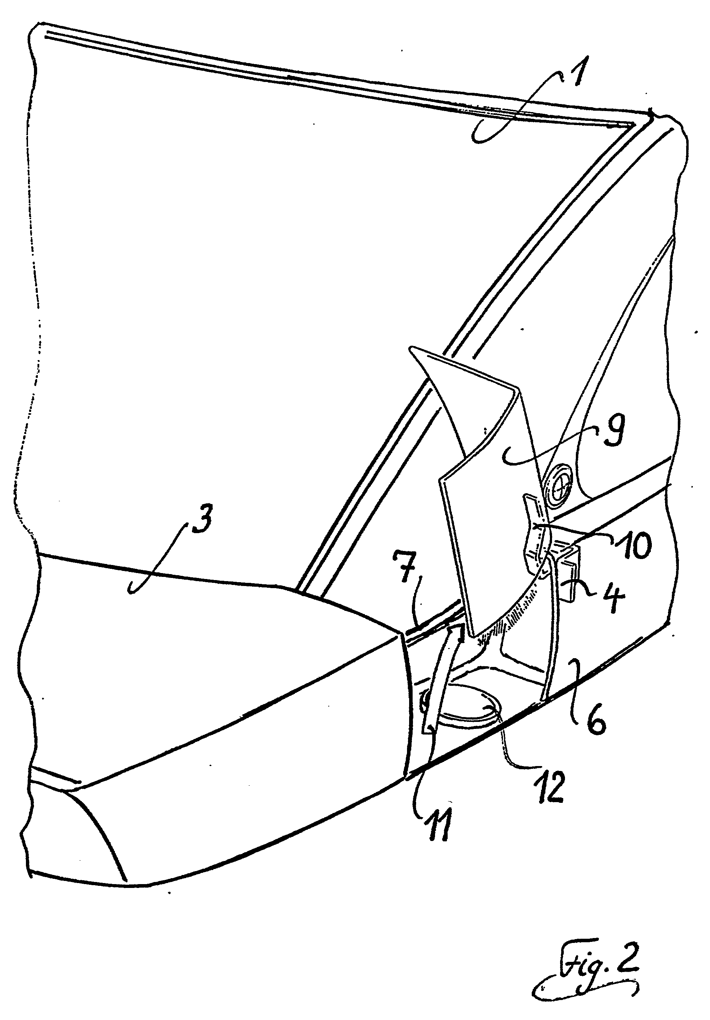

In die Gepäckraumhaube 3 formbündig integriert ist ein Klappdeckel 9, welcher, wie insbesondere aus Fig. 2 ersichtlich ist, über eine Scharnierfahne 10 ebenfalls am Scharnier 4 angelenkt und um dieses in bzw. gegen Pfeilrichtung 11 schwenkbar ist.

In geschlossenem Zustand verdeckt dieser Klappdeckel 9 dabei einen im Karosserieseitenteil 6 angeordneten Tank-Einfüllstutzen 12. Zwar ist bei geschlosener Gepäckraumhaube 3 sowie geöffnetem Klappdeckel 9 der Scharnierhebel 7 sichtbar, jedoch ist er in seiner Formgebung so gestaltet, daß eine einwandfreie Befüllung des Tank-Einfüllstutzens 12 mittels einer üblichen Zapfpistole möglich ist.

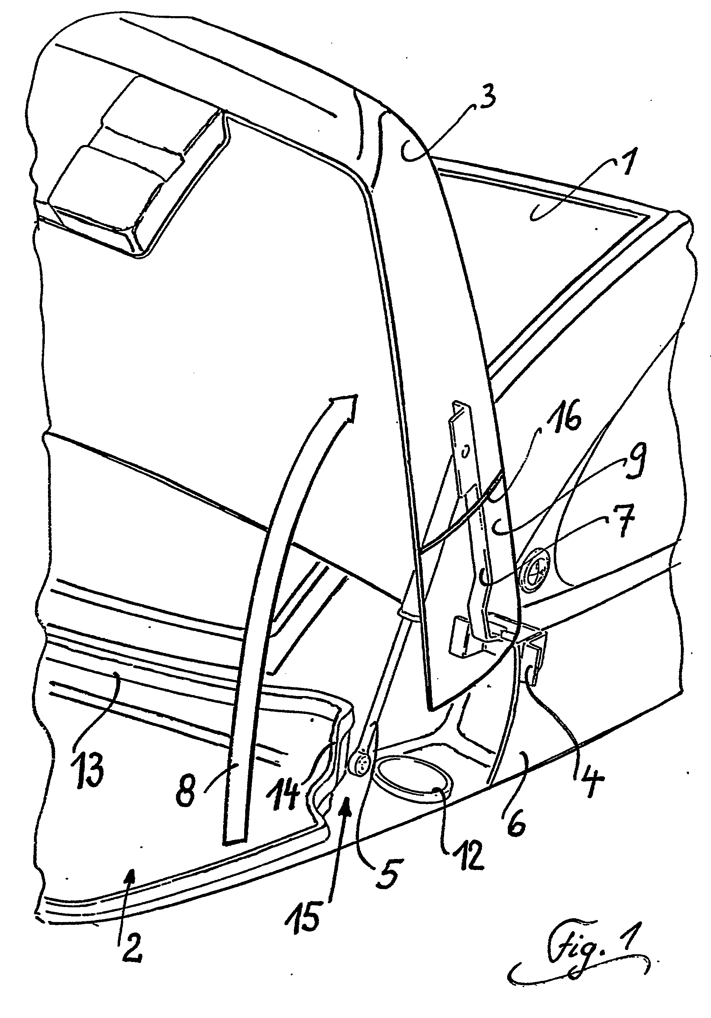

Fig. 1 zeigt ferner noch den Verlauf der zwischen der Gepäckraumabschlußkante 13 sowie der Gepäckraumhaube 3 angeordneten Dichtung 14. Im Bereich 15 des Klappdeckels 9 sowie des Tank-Einfüllstutzens 12 folgt der Dichtungsverlauf im wesentlichen der Kontur der Gepäckraumhaube 3 bei geöffnetem Klappdeckel 9, sodaß der Gepäckraum 2 optimal abgedichtet ist sowohl gegen den Tank-Einfüllstutzen 12, als auch gegen beispielsweise durch die Trennfuge 16 zwischen Gepäckraumhaube 3 sowie Klappdeckel 9 eindringendes Regenwasser.

Durch die erfindungsgemäße Anordnung des den Tank-Einfüllstutzen 12 abdeckenden Klappdeckels 9 in der Gepäckraumhaube 3 so, daß die Gepäckraumhaube 3 und der Klappdeckel 9 um die gemeinsame Achse eines Scharniers 4 schwenkbar sind, ist eine optimale stylistische Lösung gefunden und der Einfüllstutzen 12 äußerst einfach zugänglich.

Obwohl dieses Ausführungsbeispiel für ein Kraftfahrzeug mit Stufenheck dargestellt ist, bleibt die Erfindung selbstverständlich nicht auf derartig gestaltete Kraftfahrzeuge beschränkt. Nur aus Gründen der Übersichtlichkeit ist hier auch keine Federanordnung gemäß Anspruch 5 dargestellt. Auch genügt das obige Ausführungsbeispiel aus diesem Grunde nicht dem Anspruch 6, da wegen der hier dargestellten Ausbildung des Scharnierhebels 7 mit dem Öffnen der Haube 3 auch der Klappdeckel 9 geöffnet wird. Ebenso einfach ist es jedoch möglich, den Scharnierhebel 11 um den Klappdeckel 9 herumzuführen.

## Patentansprüche

1. Anordnung eines um eine Klappachse schwenkbaren Klappdeckels (9) an einem Fahrzeug mit einer um eine Schwenkachse schwenkbaren Haube (3), wobei der Klappdeckel (9) einen Einfüllstutzen abdeckt und an der Haube angeordnet ist, dadurch gekennzeichnet, daß Klappachse und Schwenkachse zusammenfallen.

2. Klappdeckel-Anordnung nach Anspruch 1, dadurch gekennzeichnet, daß der Klappdeckel (9) an einem Eckbereich der Haube (3) angeordnet ist.

3. Klappdeckel-Anordnung nach Anspruch 1 oder 2, dadurch gekennzeichnet, daß die den Klappdeckel (9) öffnende Klapprichtung (11) gleichsinnig ist mit der die Haube öffnenden Schwenkrichtung (8).

4. Klappdeckel-Anordnung mit einer Dichtung zwischen der Haube und einem durch die Haube abgedeckten Fahrzeug-Karosserieteil nach einem der vorangegangenen Ansprüche, dadurch gekennzeichnet, daß im Bereich (15) des Klappdeckels (9) der Verlauf der Dichtung (14) im wesentlichen der Haubenkontur bei geöffnetem Klappdeckel (9) folgt.

5. Klappdeckel-Anordnung nach einem der vorangegangenen Ansprüche, dadurch gekennzeichnet, daß am Klappdeckel (9) eine Federanordnung vorgesehen ist, welche ihn in geschlossener Stellung gegen eine Auflage preßt.

6. Klappdeckel-Anordnung nach einem der vorangegangenen Ansprüche, dadurch gekennzeichnet, daß der Schwenkraum der beim Schwenken der Haube (3) bewegten Bauteile (3, 5, 7) außerhalb des Klappraumes der beim Klappen des Klappdeckels (9) bewegten Bauteile (9, 10) liegt.

## Revendications

1. Arrangement d'un couvercle rabattable (9), susceptible de pivoter sur un axe de rabattement sur un véhicule, avec un capot (3) susceptible de pivoter sur un axe de pivotement, le couvercle rabattable (9) recouvrant une tubulure de remplissage et étant disposé contre le capot, arrangement caractérisé en ce que l'axe de rabattement et l'axe de pivotement coïncident.

2. Arrangement d'un couvercle rabattable selon la revendication 1, caractérisé en ce que le couvercle rabattable (9) est disposé dans un coin du capot (3).

3. Arrangement d'un couvercle rabattable selon la revendication 1 ou la revendication 2, caractérisé en ce que le sens d'ouverture (11) du couvercle rabattable (9) est le même que le sens d'ouverture (8) du capot (3).

4. Arrangement d'un couvercle rabattable selon une des précédentes revendications, avec un joint d'étanchéité entre le capot et une partie de la carrosserie du véhicule recouverte par ce capot, arrangement caractérisé en ce que, dans la zone (15) du couvercle rabattable (9), le tracé du joint d'étanchéité (14) suit pour l'essentiel le contour du capot lorsque le couvercle rabattable (9) est ouvert.

5. Arrangement d'un couvercle rabattable selon une des précédentes revendications caractérisé en ce qu'il est prévu sur le couvercle rabattable (9) un dispositif de ressort qui le presse contre un appui dans sa position de fermeture.

6. Arrangement d'un couvercle rabattable selon une des précédentes revendications, caractérisé en ce que l'espace de pivotement des pièces constitutives (3, 5, 7), déplacées lors du pivotement du capot (3), se situe hors de l'espace de rabattement des pièces de construction (9, 10) déplacées lors du rabattement du couvercle rabattable (10).

**Claims**

1. An arrangement of a hinged cover (9), pivotable about a hinge axis on a vehicle having a bonnet or boot lid (3) pivotable about a pivot axis, where the hinged cover (9) covers a filler pipe and is arranged on the bonnet or boot lid, characterised in that hinge axis and pivot axis coincide.

2. A hinged cover arrangement according to Claim 1, characterised in that the hinged cover (9) is arranged on a corner zone of the bonnet or boot lid (3).

3. A hinged cover arrangement according to Claim 1 or 2, characterised in that the hinging direction (11) opening the hinged cover (9) is in the same direction as the pivoting direction (8) opening the bonnet or boot lid.

4. A hinged cover arrangement having a gasket between the bonnet or boot lid and a vehicle body part covered by the bonnet or boot lid, according to any one of the preceding Claims, characterised in that, in the region (15) of the hinged cover (9), the course of the gasket (14) substantially follows the bonnet or boot lid contour when the hinged cover (9) is opened.

5. A hinged cover arrangement according to any one of the preceding Claims, characterised in that, on the hinged cover (9), there is provided a spring arrangement which presses it against a support when in the closed position.

6. A hinged cover arrangement according to any one of the preceding Claims, characterised in that the pivoting space of the components (3, 5, 7) which are moved in the pivoting of the bonnet or boot lid (3) lies outside the hinging space of the components (9, 10) which are moved in the hinging of the hinged cover (9).

*Fig. 1*

Fig. 2